# EUROPÄISCHE PATENTSCHRIFT

(11) **EP 3 587 893 B1**
(45) Veröffentlichungstag und Bekanntmachung des Hinweises auf die Patenterteilung: **24.02.2021**
(21) Anmeldenummer: 19182318.6
(22) Anmeldetag: 25.06.2019
(51) Int. Cl.: F16N 7/38, F16N 25/04, F16K 11/16

(54) **SCHMIERSTOFFVERTEILER, INSBESONDERE SEKTIONALVERTEILER**
LUBRICANT DISTRIBUTOR, ESPECIALLY SECTIONAL DISTRIBUTOR
DISTRIBUTEUR DE LUBRIFIANT, EN PARTICULIER DISTRIBUTEUR SECTIONNEL

(30) Priorität: 29.06.2018 DE 102018115873
(43) Veröffentlichungstag der Anmeldung: 01.01.2020
(73) Patentinhaber: Groeneveld-BEKA GmbH, 91257 Pegnitz (DE)
(72) Erfinder: Köppel, Bernhard, 91257 Pegnitz (DE); Löckert, Alexander, 91275 Auerbach (DE)
(74) Vertreter: Zech, Stefan Markus

(56) Entgegenhaltungen:
- DE-U1- 20 217 308
- DE-U1-202007 016 788
- GB-A- 191 218 280
- US-A- 1 951 771
- US-A- 5 333 640

## Beschreibung

Die Erfindung betrifft einen Schmierstoffverteiler, insbesondere Sektionalverteiler, nach Anspruch 1, eine Schmiervorrichtung nach Anspruch 21 sowie ein Verfahren zur Verteilung von Schmierstoff an mindestens eine Schmierstelle nach Anspruch 22.

Schmierstoffverteiler werden für die Zentralschmierung von Maschinen in vielen Bereichen der Technik eingesetzt, um eine Vielzahl von Schmierstellen mit Schmierstoff, wie z.B. Fett oder Öl, zu versorgen. Dabei wird der Schmierstoff aus einem Schmierstoffreservoir mittels einer Schmierstoffpumpe gefördert und durch den Schmierstoffverteiler an die jeweiligen Schmierstellen verteilt.

Aus dem Stand der Technik sind Progressivverteiler bekannt, die sich durch eine relativ genaue Zumessung des Schmierstoffs auf mehrere Schmierstellen auszeichnen. Sektionalverteiler sind typischerweise einfacher aufgebaut und können auch mit geringen Förderdrücken eine Aufteilung des Schmierstoffs gewährleisten. Sektionalverteiler sind für den Einsatz in Schmiersystemen konzipiert, in denen Schmierstellen in verschiedene Sektionen unterteilt sind, die sich jeweils im Bedarf an Schmierstoff unterscheiden oder verschieden weit entfernt sind.

Aus EP 3 272 591 A1 ist ein Schmiermittelverteiler für ein Fahrzeugsystem bekannt, der eine Vielzahl individuell ansteuerbar Versorgungsventile aufweist, um die Schmierpunkte verschiedener Betriebskomponenten gruppenweise mit Schmiermittel zu versorgen. Die Versorgungsventile sind als Magnetventile ausgebildet, die sich durch Bestromung eines zugehörigen Solenoids zwischen einer geöffneten und einer geschlossenen Stellung umschalten lassen.

Herkömmliche Schmierstoffverteiler haben den Nachteil, dass sie entweder relativ wenig flexibel einsetzbar oder vergleichsweise aufwendig aufgebaut sind. Besonders die elektrische Ansteuerung jedes einzelnen Ventils ist konstruktiv aufwendig, dementsprechend fehleranfällig bzw. wartungsintensiv und teuer.

Aus US 1 951 771 A ist ein Schmierstoffverteiler mit einem angetriebenen drehbaren Ventil in einem Gehäuse bekannt, wobei das Gehäuse zwei beabstandete Reihen radialer Auslässe aufweist. Das drehbare Ventil weist eine Bohrung auf, in der ein hin und her beweglicher Kolben zum Ausschieben des Schmierstoffs abwechselnd durch die einen oder die anderen radialen Auslässe geführt ist.

Ausgehend von diesem Stand der Technik hat die vorliegende Erfindung die Aufgabe, einen Schmierstoffverteiler bereitzustellen, der einfach aufgebaut und insbesondere möglichst flexibel einsetzbar ist, sowie ein Verfahren zur Verteilung von Schmierstoff an mehrere Schmierstellen vorzuschlagen, das einfach durchführbar ist und insbesondere eine bedarfsgerechte Schmierung gewährleistet.

Diese Aufgabe wird durch einen Schmierstoffverteiler nach Anspruch 1 gelöst.

Insbesondere wird die Aufgabe gelöst durch einen Schmierstoffverteiler, insbesondere Sektionalverteiler, zur Verteilung von Schmierstoff an mindestens eine Schmierstelle, umfassend:
- einen Verteilerkörper mit einer Einlassöffnung für Schmierstoff, die fluidisch mit mindestens einem Auslasskanal verbunden ist, der in eine Auslassöffnung des Verteilerkörpers mündet,
- ein in dem Verteilerkörper drehbar gelagertes Drehventil, das zwischen einer Öffnungsstellung des Drehventils, in der der Auslasskanal geöffnet ist, um Schmierstoff zur Auslassöffnung durchzulassen, und einer Schließstellung des Drehventils, in der der Auslasskanal geschlossen ist, verstellbar ist,
- einen, insbesondere elektromotorischen, Antrieb, der mit einem Steuergetriebe gekoppelt ist, das ein Steuerrad mit mindestens einem Steuerverzahnungsabschnitt umfasst, der mit einer Verzahnung des Drehventils in Eingriff bringbar ist, um das Drehventil zwischen der Öffnungsstellung und der Schließstellung zu verstellen,
wobei ein Schmierungszeitintervall, während dem sich ein Drehventil in der Öffnungsstellung befindet, variabel einstellbar ist.

Eine Idee der Erfindung ist es, die Verteilung des Schmierstoffs an mindestens eine Schmierstelle bzw. Sektion eines Schmiersystems durch einen, vorzugsweise elektromotorisch, angetriebenen Schmierstoffverteiler mechanisch zu steuern. Insbesondere wird das Öffnen und Schließen von Auslasskanälen für Schmierstoff rein mechanisch durch ein Steuergetriebe bewirkt. Der Schmierstoffverteiler ist insbesondere zur variablen Steuerung der Schmierstoffversorgung mindestens einer Schmierstelle bzw. Schmiersektion geeignet. Der Schmierstoffverteiler umfasst insbesondere keine einem Auslasskanal zugeordneten Pumpelemente. Insbesondere wird dem Schmierstoffverteiler unter Förderdruck stehender Schmierstoff über die Einlassöffnung zugeleitet. Unter einem Sektionalverteiler kann ein Schmierstoffverteiler verstanden werden, der die Verteilung von Schmierstoff an verschiedene Sektionen eines Schmierungssystems gewährleistet, wobei eine Sektion eine oder mehrere Schmierstellen umfassen kann.

Das Steuergetriebe kann als ein durch den Antrieb rotatorisch betätigbarer Steuermechanismus verstanden werden, der eine Verstellbewegung des mindestens einen Drehventils zwischen einer Schließstellung und einer Öffnungsstellung bewirkt. Das Steuergetriebe wird vorzugsweise von einem einzigen Antrieb (zentral) angetrieben. Der Antrieb kann mit dem Steuergetriebe mittelbar, insbesondere über eine Getriebestufe (Zahnradgetriebe, Riemengetribe oder Kettengetriebe), vorzugsweise ein Stirnrad- oder Schneckengetriebe, oder unmittelbar, z.B. über eine Welle, gekoppelt sein. Das Steuergetriebe ist vorzugsweise als ein Stirnrad- oder Schneckengetriebe ausgeführt, wobei die Drehachsen des Drehventils und des Steuerrads insbesondere parallel zueinander sind.

Ein Drehventil kann als ein Ventil verstanden werden, das durch eine Drehbewegung von einer Öffnungsstellung in eine Schließstellung, und umgekehrt, bewegbar (schaltbar) ist. Insofern kann unter einem Verstellen des Drehventils eine Verdrehung verstanden werden, wobei die Öffnungsstellung und die Schließstellung insbesondere verschiedene Winkelstellungen des Drehventils darstellen. Ein Drehventil ist vorzugsweise rotatorisch betätigbar. Insbesondere lässt das Drehventil in einer Öffnungsstellung einen Schmierstofffluss durch den Auslasskanal zu (Freigabe des Auslasskanals), während das Drehventil in einer Schließstellung einen Schmierstofffluss durch den Auslasskanal verhindert (Versperrung des Auslasskanals). Das Drehventil ist insbesondere als ein Absperrhahn ausgeführt, wobei der Auslasskanal durch das Drehventil hindurch verlaufen kann.

Unter einer fluidischen Verbindung zwischen der Einlassöffnung und einem Auslasskanal kann verstanden werden, dass Schmierstoff direkt oder indirekt von der Einlassöffnung in den Auslasskanal fließen kann, insbesondere indirekt über einen oder mehrere kommunizierende Kanäle (Kanalsystem), vorzugsweise über einen (zentralen) Verteilungskanal. Es können mehrere Einlassöffnungen für Schmierstoff vorgesehen sein. Der Verteilerkörper kann ein- oder mehrteilig ausgeführt sein und insbesondere eine rotationssymmetrische, vorzugsweise zylindrische, Grundform aufweisen.

Ein erfindungsgemäßer Schmierstoffverteiler hat den Vorteil, dass er durch den Einsatz von Drehventilen, die über ein Steuergetriebe steuerbar sind, einfach aufgebaut ist. Dadurch wird eine mechanische Steuerung der Schmierstoffverteilung erreicht, wobei auf eine aufwändige elektrische Steuerung von einzelnen Ventilen der Auslasskanäle verzichtet werden kann. Außerdem ist die den einzelnen Auslassöffnungen zugeteilte Schmierstoffmenge variabel einstellbar bzw. steuerbar, sowohl im zeitlichen Verlauf für eine bestimmte Auslassöffnung als auch für verschiedene Auslassöffnungen des Schmierstoffverteilers.

In einer vorteilhaften Weiterbildung der Erfindung weist der Antrieb eine von einem Elektromotor angetriebene Antriebswelle mit einer Verzahnung auf, die mit einer Antriebsverzahnung des Steuerrads kämmt. Die Verzahnung der Antriebswelle kann ein Antriebszahnrad oder eine Antriebsschnecke sein. Die Antriebsverzahnung kann eine Außenverzahnung oder eine Innenverzahnung des Steuerrads sein. Vorzugsweise greifen das Antriebsrad und das Steuerrad über eine Stirnverzahnung ineinander ein. Die Drehachsen der Antriebswelle und des Steuerrads sind insbesondere parallel zueinander, vorzugsweise parallel zu einer Längsachse des Verteilerkörpers. Das Übersetzungsverhältnis zwischen dem Antrieb und dem Steuergetriebe bzw. dem Steuerrad ist vorzugsweise größer als 1.

In einer vorteilhaften Weiterbildung der Erfindung sind mehrere Drehventile, insbesondere im gleichen Abstand der Drehachse des jeweiligen Drehventils zu einer Drehachse des Steuerrads, um das Steuerrad herum angeordnet. Vorzugsweise sind die Drehventile in Umfangsrichtung des Steuerrads gleichmäßig verteilt. Es können beispielsweise 2 bis 16, vorzugsweise 4 bis 12, weiter vorzugsweise 6 bis 10, besonders bevorzugt 8 Drehventile vorgesehen sein, wobei jedes Drehventil vorzugsweise einem Auslasskanal zugeordnet ist. Durch diese Anordnung können mehrere Drehventile gleichzeitig oder nacheinander mit dem Steuerverzahnungsabschnitt des Steuerrads in Eingriff kommen. Dadurch ist eine (zentrale) Steuerung mehrerer Drehventile konstruktiv einfach möglich.

In einer vorteilhaften Weiterbildung der Erfindung weist das Steuerrad mindestens einen verzahnten Sektor, über den sich der Steuerverzahnungsabschnitt erstreckt, und mindestens einen unverzahnten Sektor auf. Das Steuerrad kann als ein teilverzahntes Zahnrad verstanden werden. Ein verzahnter Sektor erstreckt sich insbesondere über einen Teil des Umfangs des Steuerrads, d.h. er kann eine Teilverzahnung des Steuerrads darstellen. Insbesondere teilt sich das Steuerrad in verzahnte und unverzahnte Sektoren auf. Ein unverzahnter Sektor kann durch einen Bereich der Umfangsfläche des Steuerrads ausgebildet sein, in dem keine Zähne ausgebildet sind. Vorzugsweise weist der verzahnte Sektor eine Außenverzahnung auf. Insbesondere erstreckt sich ein verzahnter Sektor über einen Winkelbereich zwischen 30° und 90°, vorzugsweise zwischen 45° und 75°, weiter vorzugsweise zwischen 50° und 70°, besonders bevorzugt von ungefähr 60°. Das Steuerrad kann mehrere verzahnte Sektoren aufweisen, die durch unverzahnte Sektoren voneinander getrennt sind. Der Steuerverzahnungsabschnitt umfasst beispielsweise zwischen 1 und 8, vorzugsweise zwischen 2 und 6, weiter vorzugsweise zwischen 3 und 5, besonders bevorzugt 4 Steuerzähne. Insbesondere ist der Wälzkreisdurchmesser des Steuerrads größer als der Wälzkreisdurchmesser der Verzahnung des Drehventils. Das Übersetzungsverhältnis zwischen dem Steuerrad und dem Drehventil beträgt beispielsweise zwischen 1/4 und 1, vorzugsweise zwischen 1/3 und 1/2, beispielsweise ca. 0,4. Insbesondere schneidet der Kopfkreis der Verzahnung des Drehventils den Umfangskreis des unverzahnten Sektors des Steuerrads nicht. Das Steuerrad kann bei einer Drehung entlang des verzahnten Sektors über den Steuerverzahnungsabschnitt mit der Verzahnung des Drehventils in Eingriff kommen, während im unverzahnten Sektor kein Eingriff in die Verzahnung des Drehventils möglich ist. Dadurch ergibt sich über eine Umdrehung des Steuerrads ein zeitweiser Eingriff mit der Verzahnung eines bzw. jeden Drehventils, wobei das Drehventil während des Eingriffs verstellt (verdreht) wird.

In einer vorteilhaften Weiterbildung der Erfindung weist die Verzahnung des Drehventils unterschiedliche axiale Verzahnungsbereiche auf, wobei ein erster axialer Verzahnungsbereich insbesondere weniger, vorzugsweise halb so viele, Zähne aufweist wie ein zweiter axialer Verzahnungsbereich. Axiale Verzahnungsbereiche können entlang der Drehachse des Drehventils unmittelbar aneinander angrenzen oder voneinander beabstandet sein. Insbesondere bilden erste und zweite axiale Verzahnungsbereiche eine abgestufte Verzahnung des Drehventils.

In einer vorteilhaften Weiterbildung der Erfindung weisen erste Zähne eines ersten axialen Verzahnungsbereichs und zweite Zähne eines zweiten axialen Verzahnungsbereichs unterschiedliche Zahnlängen auf, wobei vorzugsweise erste Zähne mit einer ersten Zahnlänge und zweite Zähne einer zweiten Zahnlänge abwechselnd angeordnet sind. Insbesondere sind erste und zweite Zähne abwechselnd in Umfangsrichtung des Drehventils angeordnet. Erste Zähne sind vorzugsweise kürzer ausgebildet als zweite Zähne, wobei sich erste Zähne bevorzugt entlang eines Teils der zweiten Zähne erstrecken. Vorzugsweise sind die Zahnkreise (Fuß- und/oder Kopfkreise), und insbesondere die Zahndicke, von ersten und zweiten Zähnen (im Wesentlichen) gleich. Insbesondere dienen erste und zweite Zähne der Verstellung des Drehventils. Zweite Zähne können, insbesondere über ihre (verlängerten) Zahnflanken, das Drehventil gegen eine (unbeabsichtigte) Verdrehung sichern.

In einer vorteilhaften Weiterbildung der Erfindung weist das Steuerrad im unverzahnten Sektor einen ersten und einen zweiten axialen Bereich auf, wobei der erste axiale Bereich eine Umfangsausnehmung aufweist. Insbesondere ist eine Umfangsfläche des Steuerrads im unverzahnten Sektor abgestuft, vorzugsweise zweistufig ausgebildet. Vorzugsweise springt die Umfangsfläche des Steuerrads im ersten axialen Bereich gegenüber dem Kopfkreis des Steuerverzahnungsabschnitts zurück, wobei die Form der Umfangsausnehmung insbesondere einem Kreisringsegment des Steuerrads entspricht. Bevorzugt entspricht der Durchmesser des Steuerrads im ersten axialen Bereich dem Fußkreisdurchmesser und in einem zweiten axialen Bereich dem Kopfkreisdurchmesser des Steuerverzahnungsabschnitts. Insbesondere geht die Umfangsfläche des Steuerrads im zweiten axialen Bereich bündig in die beiden endseitigen Steuerzähne des Steuerverzahnungsabschnitts über. Das Steuerrad kann sich aufgrund der Umfangsausnehmung bzw. des Rücksprungs im unverzahnten Sektor über die ersten (kürzeren) Zähne des Drehventils hinwegdrehen, d.h. ohne in die Verzahnung des Drehventils einzugreifen.

In einer vorteilhaften Weiterbildung der Erfindung erstrecken sich der erste Verzahnungsbereich der Verzahnung des Drehventils in den ersten axialen Bereich aber nicht in den zweiten axialen Bereich des Steuerrads und sich der zweite Verzahnungsbereich der Verzahnung des Drehventils in den ersten axialen Bereich und den zweiten axialen Bereich des Steuerrads. Insbesondere ist die Zahnlänge der ersten Zähne im ersten Verzahnungsbereich kürzer als die Zahnlänge der zweiten Zähne im zweiten Verzahnungsbereich. Auf diese Weise können der erste und der zweite Verzahnungsbereich mit dem Steuerverzahnungsabschnitt im verzahnten Sektor des Steuerrads in Eingriff kommen, während der zweite Verzahnungsbereich mit der Umfangsfläche Steuerrads im unverzahnten Sektor zu einer Verdrehsicherung für das Drehventils zusammenwirken kann.

In einer vorteilhaften Weiterbildung der Erfindung blockiert die Umfangsfläche im zweiten axialen Bereich des Steuerrads eine Drehbewegung des Drehventils, wenn sich das Drehventils in einer Schließstellung befindet, insbesondere indem Zahnflanken der zweiten Zähne bei einer Verdrehung des Drehventils gegen die Umfangsfläche im zweiten axialen Bereich des Steuerrads anschlagen. Eine solche Verdrehsicherung ist einfach ohne zusätzliche Bauelemente umzusetzen. Beispielsweise könnte durch Vibrationen im Betrieb des Schmierstoffverteilers eine unbeabsichtigte Verdrehung eines Drehventils aus der Schließstellung heraus hervorgerufen werden.

In einer vorteilhaften Weiterbildung der Erfindung weist der Verteilerkörper einen von der Einlassöffnung ausgehenden, vorzugsweise radialen, Einlasskanal auf, der über einen, vorzugsweise zentralen, Verteilungskanal mit dem mindestens einen, vorzugsweise radialen, Auslasskanal fluidisch verbunden ist. Einlass- und Auslasskanäle können im Verteilerkörper ausgebildet sein, vorzugsweise als Bohrungen.

In einer vorteilhaften Weiterbildung der Erfindung sitzt das Steuerrad auf einer im Verteilerkörper gelagerten Achse, die insbesondere parallel zu einer Drehachse des Drehventils ausgerichtet ist. Die Achse ist vorzugsweise im Verteilerkörper und/oder in einem Gehäusedeckel drehbar gelagert. Die Achse ist insbesondere zentral (mittig) im Verteilerkörper, vorzugsweise entlang der Längsachse des Verteilerkörpers, angeordnet. Dadurch ergibt sich ein symmetrischer Aufbau des Schmierstoffverteilers. Das Steuerrad kann ein- oder mehrteilig ausgeführt sein, beispielsweise zweiteilig, bestehend aus einem Antriebszahnkranz, der mit dem Antrieb gekoppelt ist, und einem Steuerkranz, der das mindestens eine Drehventil steuert. Vorzugsweise ist der Steuerkranz fest mit der Achse verbunden. Der Antriebszahnkranz kann fest mit der Achse und/oder dem Steuerkranz verbunden sein.

In einer vorteilhaften Weiterbildung der Erfindung ist der Verteilungskanal als ein Ringkanal, insbesondere als eine Ringnut in einer Umfangsfläche der Achse, ausgebildet. Über einen (zentralen) Verteilungskanal kann Schmierstoff von der Einlassöffnung in mehrere Auslasskanäle verteilt werden. Insofern ergibt sich eine zentrale Schmierstoffverteilung über den Verteilungskanal. Vorzugsweise ist die Achse über Dichtungen (Dichtungsringe) in axialer Richtung gegen den Austritt von Schmierstoff abgedichtet.

In einer vorteilhaften Weiterbildung der Erfindung umfasst das Drehventil einen Absperrkörper, vorzugswese einen Absperrzylinder, mit einer Durchgangsöffnung, die vorzugsweise senkrecht zur Drehachse verläuft. Die Durchgangsöffnung insbesondere als Bohrung ausgeführt, die in einer Öffnungsstellung betrieben wird als Abschnitt des Auslasskanals angesehen werden kann. Das Drehventil kann als ein Zylinderhahn (durchbohrter Zylinder als Absperrkörper) oder als ein Kugelhahn (durchbohrte Kugel als Absperrkörper) ausgeführt sein. Der Absperrkörper und die Verzahnung des Drehventils können einteilig oder mehrteilig ausgeführt sein. Ein solches Drehventil ist konstruktiv einfach aufgebaut und wartungsarm.

In einer vorteilhaften Weiterbildung der Erfindung weist der Auslasskanal einen inneren Kanalabschnitt, der in den Verteilungskanal einmündet, und einen äußeren Kanalabschnitt auf, wobei der Absperrkörper des Drehventils zwischen dem inneren und dem äußeren Kanalabschnitt angeordnet ist. Innere und äußere Kanalabschnitte sind in Bezug auf den Verteilerkörper insbesondere radial innen bzw. außen, insbesondre relativ zum Drehventil, angeordnet. Der äußere Kanalabschnitt mündet vorzugsweise in die Auslassöffnung ein. Insbesondere setzt die Durchgangsöffnung des Absperrkörpers in der Öffnungsstellung des Drehventils den Auslasskanal fort. Der innere Kanalabschnitt weist vorzugsweise eine Verteilungsöffnung auf, die in den Verteilungskanal einmündet bzw. (radial) davon wegführt.

In einer vorteilhaften Weiterbildung der Erfindung ist der Steuerverzahnungsabschnitt des Steuerrads derart auf die Verzahnung, insbesondere den ersten axialen Verzahnungsabschnitt, des Drehventils abgestimmt, dass eine Umdrehung des Steuerrads eine Verdrehung des Drehventils um 180° bewirkt. Dadurch wird sichergestellt, dass ein Drehventil durch das Steuerrad von einer Schließstellung (über die Öffnungsstellung) wieder in die Schließstellung bewegt wird, wenn sich das Steuerrad einmal an dem Drehventil vorbei dreht. Insbesondere kann sich ein Drehventil nur in der Öffnungsstellung befinden, wenn der Steuerverzahnungsabschnitt des Steuerrads mit der Verzahnung des Drehventils in Eingriff ist. Die Schmierstoffverteilung ist dadurch zuverlässig steuerbar.

In einer vorteilhaften Weiterbildung der Erfindung ist ein Schmierungszeitintervall, während dem sich ein Drehventil in der Öffnungsstellung befindet, für mehrere Drehventile nacheinander variabel einstellbar. Unter einem Schmierungszeitintervall kann eine Zeitdauer verstanden werden, während der Schmierstoff durch den einem bestimmten Drehventil zugeordneten Auslasskanal zur Schmierung einer Schnittstelle austreten kann. Insbesondere ist die Schmierstoffverteilung durch eine variable Ansteuerung des Antriebs über die Kinematik des Steuergetriebes variabel einstellbar. Genauer gesagt kann das Schmierungszeitintervall durch die Beeinflussung der Bewegung des Steuerrads eingestellt werden. Insbesondere kann durch ein zeitweises Anhalten des Steuerrads, während dieses im Eingriff mit der Verzahnung des Drehventils ist, das Schmierungszeitintervall beliebig lang eingestellt werden. Dadurch ist die Schmiermittelmenge einstellbar, die pro Öffnung des Auslasskanals aus dem Schmierstoffverteiler an eine Schmierstelle abgegeben wird.

In einer vorteilhaften Weiterbildung der Erfindung ist der Elektromotor als Schrittmotor ausgeführt, der insbesondere durch eine Verteilersteuerungseinheit ansteuerbar ausgebildet ist. Durch einen auf die Kinematik des Steuergetriebes angepassten Schrittmotor, bzw. dessen abgestimmte Ansteuerung, ist eine zeitlich variable Öffnung eines oder mehrerer Drehventile einfach umsetzbar. Dadurch ist die Schmierstoffverteilung bedarfsgerecht steuerbar.

In einer vorteilhaften Weiterbildung der Erfindung sind zwischen 2 und 16, vorzugsweise zwischen 4 und 12, weiter vorzugsweise zwischen 6 und 10, besonders bevorzugt 8, Auslasskanäle vorgesehen, denen jeweils ein Drehventil zugeordnet ist. Dadurch kann eine entsprechende Anzahl von Stellen oder Schmiersektionen mit Schmierstoff versorgt werden.

In einer vorteilhaften Weiterbildung der Erfindung umfasst der Schmierstoffverteiler einen Durchflusssensor, der fluidisch mit der Einlassöffnung verbunden ist, insbesondere zur Erfassung eines Schmierstoffflusses im Auslasskanal. Vorzugsweise ist der Durchflusssensor als Ovalradzähler oder Kolbenzähler ausgebildet, beispielsweise als ein Kolbenzähler in Progressiv-Kolben-Bauweise. Der Durchflusssensor (Durchflusszähler) kann stromaufwärts oder stromabwärts der Einlassöffnung angeordnet sein. Insbesondere ist der Durchflusssensor mit der Einlassöffnung fluidisch kommunizierend an den Verteilerkörper angeschlossen, vorzugsweise angeschraubt, oder im Einlasskanal, d.h. insbesondere innerhalb des Verteilerkörpers, angeordnet. Der Durchflusssensor kann mit einer (zentralen) Steuereinheit des Schmierstoffverteilers (Verteilersteuerungseinheit) oder einer Schmiervorrichtung (signalleitend) verbunden sein. Ein (zentraler) Durchflusssensor, der der Einlassöffnung zugeordnet bzw. fluidisch mit ihr verbunden ist, ermöglicht einfach, insbesondere mit einem einzigen Durchflusssensor, die Erfassung bzw. Überwachung der durch den jeweils geöffneten Auslasskanal verteilten Schmierstoffmenge.

In einer vorteilhaften Weiterbildung der Erfindung umfasst der Schmierstoffverteiler eine Positionserfassungseinrichtung zur Erfassung der Stellung des Steuergetriebes, wobei die Positionserfassungseinrichtung insbesondere einen Positionssensor und ein mit dem Steuerrad mitrotierendes Erregerelement umfasst. Der Positionssensor ist vorzugsweise als Hall-Sensor (Hall-Schalter) oder Reed-Schalter ausgeführt. Die Positionserfassungseinrichtung ist insbesondere dazu ausgebildet, basierend auf einer Erfassung der Position des Steuerrads, und vorzugsweise basierend auf einer Drehzahl des Antriebsmotors, die Stellung der Drehventile zu ermitteln. Vorzugsweise ist das Erregerelement mit dem Steuerrad fest verbunden, vorzugsweise an einer Stirnseite des Steuerrads. Das Erregerelement weist insbesondere ein weichmagnetisches (ferromagnetisches) Material auf, insbesondere ein Metall. Der Positionssensor ist insbesondere derart angeordnet, dass er eine Bewegung, insbesondere einen Durchgang, des Erregerelements erfasst, die insbesondere auf einer Drehbewegung des Steuerrads basiert. Vorzugsweise erfasst der Positionssensor eine Störung eines Magnetfeldes durch das Erregerelement. Der Positionssensor kann mit einer (zentralen) Verteilersteuerungseinheit oder einer Steuereinheit einer Schmierstoffvorrichtung (signalleitend) verbunden sein. Insbesondere definiert das Erregerelement eine Durchgangsposition (Nullposition) des Steuerrads für jede Umdrehung des Steuerrads. Insbesondere kann ausgehend von dieser erfassten Durchgangsposition aufgrund einer erfassten bzw. ermittelten Drehzahl des Antriebsmotors eine (momentane) Position des Steuerrads ermittelt werden. Aufgrund der bekannten Kinematik des Steuergetriebes, d.h. der gekoppelten Bewegungen des Steuerrads und der Drehventile, kann die (momentane) Stellung jedes Drehventils (Öffnungsstellung oder Schließstellung) ermittelt werden. Insbesondere ist ermittelbar, welches Drehventil momentan geöffnet ist, d.h. durch welchen Auslasskanal bzw. Verteilungsanschluss Schmierstoff fließt.

Die genannte Aufgabe wird außerdem insbesondere gelöst durch eine Schmiervorrichtung umfassend einen erfindungsgemäßen Schmierstoffverteiler und eine Schmierstoffpumpe, die zur Bereitstellung von, insbesondere mit einem Förderdruck beaufschlagtem, Schmierstoff mit der Einlassöffnung des Schmierstoffverteilers verbunden ist.

Die genannte Aufgabe wird außerdem insbesondere gelöst durch ein Verfahren zur Verteilung von Schmierstoff an mindestens eine Schmierstelle durch einen Schmierstoffverteiler, der mindestens ein in einem Verteilerkörper drehbar gelagertes Drehventil zum Öffnen und Schließen eines Auslasskanals des Verteilerkörpers für Schmierstoff aufweist, wobei ein, insbesondere elektromotorischer, Antrieb des Schmierstoffverteilers mit einem Steuergetriebe zum Verstellen des Drehventils gekoppelt ist, insbesondere durch einen erfindungsgemäßen Schmierstoffverteiler oder eine erfindungsgemäße Schmiervorrichtung, umfassend die folgenden Schritte:
a) Verstellen des Drehventils aus einer Schließstellung, in der der Auslasskanal geschlossen ist, in eine Öffnungsstellung, in der der Auslasskanal geöffnet ist, durch Ansteuern des Antriebs,
b) Einstellen, vorzugsweise variabel, eines Schmierungszeitintervalls durch Ansteuern des Antriebs, wobei sich das Drehventil während des Schmierungszeitintervalls in der Öffnungsstellung befindet,
c) Verstellen des Drehventils aus der Öffnungsstellung in die Schließstellung, durch Ansteuern des Antriebs,
wobei ein oder mehrere Drehventile (20) nacheinander durch eine Wiederholung der Schritte a) bis c) geöffnet und geschlossen wird bzw. werden, wobei das Schmierungszeitintervall jeweils verschieden eingestellt wird.

Der Antrieb kann durch eine Verteilersteuerungseinheit des Schmierstoffverteilers angesteuert werden, wobei insbesondere ein Elektromotor des Antriebs mit einem entsprechenden Eingangssignal versorgt wird. Insbesondere bewirkt das Ansteuern des Antriebs eine Betätigung des Steuergetriebes, wobei über eine Verdrehung des Steuerrads die Drehventile verstellt werden. Der Antrieb ist insbesondere als ein zentraler (rotatorischer) Antrieb des Schmierstoffverteilers ausgeführt. Insbesondere ist die Schmierstoffverteilung durch eine variable Ansteuerung des Antriebs über die Kinematik des Steuergetriebes variabel einstellbar.

Das Verfahren kann weiterhin einige oder alle verfahrenstechnischen Merkmale umsetzen, die im Zusammenhang mit dem Schmierstoffverteiler beschrieben sind. Es hat ähnliche Vorteile, wie diese bereits in Verbindung mit dem erfindungsgemäßen Schmierstoffverteiler beschrieben wurden.

In dem Verfahren wird bzw. werden ein oder mehrere Drehventile nacheinander durch eine Wiederholung der Schritte a) bis c) geöffnet und geschlossen, wobei das Schmierungszeitintervall jeweils verschieden eingestellt wird. Insbesondere lässt sich durch eine zeitlich abgestimmte Ansteuerung des Antriebs ein Drehventil beliebig lang in der Öffnungsstellung halten, wenn das Steuerrad mit der Verzahnung des Drehventils im Eingriff ist. Insbesondere können Schmierungszeitintervalle für verschiedene Auslassöffnungen des Schmierstoffverteilers (Schmierstoffauslässe) unabhängig voneinander gewählt bzw. eingestellt werden.

Nachfolgend werden Ausführungsbeispiele der Erfindung beschrieben, die anhand von Abbildungen näher erläutert werden. Hierbei zeigen:
- Figur 1: eine Ausführungsform eines erfindungsgemäßen Schmierstoffverteilers in einer perspektivischen Schnittansicht;
- Figur 2A: Teile des Schmierstoffverteilers nach Figur 1 in einer Längsschnittansicht entlang der Schnittlinie A-A in Figur 2B;
- Figur 2B: Teile des Schmierstoffverteilers nach Figur 2A in einer Querschnittsansicht durch den ersten axialen Bereich des Steuerrads;
- Figur 3A: eine Ausführungsform eines erfindungsgemäßen Schmierstoffverteilers in einer Querschnittsansicht entlang der Schnittlinie B-B in Figur 3B;
- Figur 3B: den Schmierstoffverteiler nach Figur 3A in einer Seitenansicht;
- Figur 4A: den Schmierstoffverteiler nach den Figuren 3A und 3B in einer Querschnittsansicht entlang der Schnittlinie C-C in Figur 4B;
- Figur 4B: Schmierstoffverteiler nach Figur 4A in einer Seitenansicht;
- Figur 5: eine Ausführungsform eines erfindungsgemäßen Schmierstoffverteilers in einer Querschnittsansicht.

In der nachfolgenden Beschreibung der Erfindung werden für gleiche und gleich wirkende Elemente dieselben Bezugszeichen verwendet.

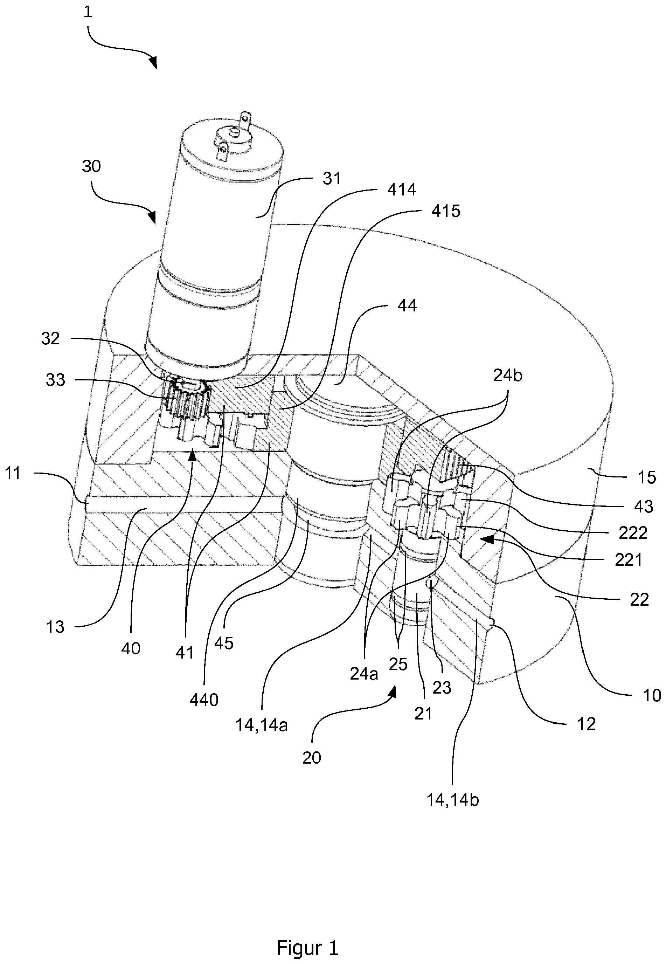

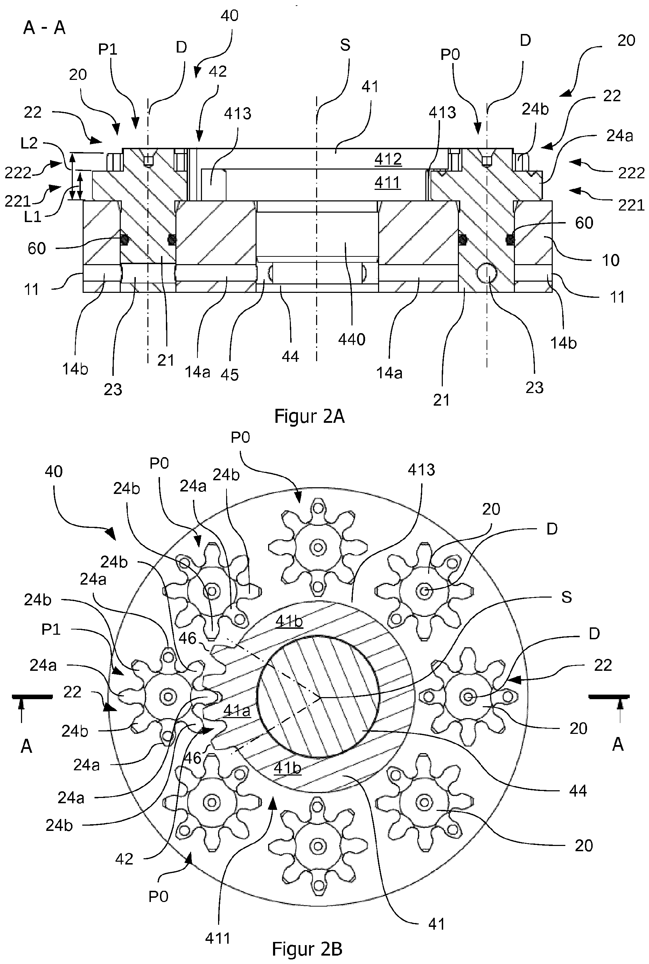

Figur 1 zeigt einen Schmierstoffverteiler 1, bzw. einen Sektionalverteiler, der einen Verteilerkörper 10, vorzugsweise aus einem metallischen Werkstoff, mit einer Einlassöffnung 11, und mehreren Auslassöffnungen 12 für Schmierstoff aufweist. Auf den Verteilerkörper 10 ist ein Gehäusedeckel 15 aufgesetzt, die beide eine zylindrische Grundform haben. Über die Einlassöffnung 11 wird durch eine Schmierstoffpumpe mit einem Förderdruck bereitgestellter Schmierstoff in den Einlasskanal 13 eingeleitet, von wo der Schmierstoff über den Verteilungskanal 45 auf die verschiedenen, sternförmig angeordneten, Auslasskanäle 14 verteilt wird, die in die jeweiligen Auslassöffnungen 12 münden. Der Verteilungskanal 45 ist als Ringnut in der Umfangsfläche 440 der Achse 44 ausgeführt. An die Auslassöffnung 12 können über Verteilungsanschlüsse 51 (nicht gezeigt) Schmierstoffleitungen zur Versorgung von Schmierstellen bzw. Schmiersektionen angeschlossen werden. Jedem Auslasskanal 14 ist ein Drehventil 20 zugeordnet, das in dem Verteilerkörper 10 um eine Drehachse D drehbar gelagert ist. Die Drehventile 20 weisen einen Absperrkörper 21 auf, der den Auslasskanal 14 in einen inneren Kanalabschnitt 14a und einen äußeren Kanalabschnitt 14b unterteilt. Der Absperrkörper 21 weist eine als Durchgangsbohrung ausgeführte Durchgangsöffnung 23 auf, die den Auslasskanal 14 fortsetzt, wenn sie in Richtung des Auslasskanals 14, hier radial zum Verteilerkörper 10, ausgerichtet ist. Dichtungen 60 (siehe Figur 2A) sind in Dichtungsnuten 25 eingesetzt, um die Drehventile 20 axial abzudichten. In Figur 1 ist das dargestellte Drehventil 20 in einer Öffnungsstellung P1 dargestellt, in der Schmierstoff durch den Auslasskanal 14 und die Durchgangsöffnung 23 aus dem Schmierstoffverteiler 1 austreten kann.

Der Schmierstoffverteiler 1 wird durch den Antrieb 30, der einen Elektromotor 31, insbesondere einen Schrittmotor, umfasst über eine Antriebswelle 32, die mit einer Verzahnung 33, hier ein Antriebszahnrad, verbunden ist, angetrieben. Ein Steuergetriebe 40 umfasst ein Steuerrad 41 und die Drehventile 20 mit ihren Verzahnungen 22. Das Steuerrad 41 wird durch das Antriebszahnrad 33 angetrieben. Das Steuerrad 41 ist zweiteilig ausgeführt und besteht aus einem Antriebszahnkranz 414 mit einer als Außenverzahnung ausgebildeten Antriebsverzahnung 43, mit der das Antriebszahnrad 33 kämmt, und einem Steuerkranz 415, der den Steuerverzahnungsabschnitt 42 ausbildet. Das Steuerrad 41 sitzt fest auf einer Achse 44, die mittig im Verteilerkörper 10 um eine Drehachse S drehbar gelagert ist. Die Drehventile 20 weisen eine Verzahnung 22 auf, die mit einem Verzahnungsabschnitt 42 des Steuerrads 41 zeitweise in Eingriff bringbar ist.

Aus den Figuren 2A und 2B wird die Funktionsweise des Schmierstoffverteilers 1 deutlich. Insgesamt acht Drehventile 20 sind in gleichmäßigen Abständen in Umfangsrichtung um das Steuerrad 41 herum angeordnet. Das Steuerrad 41 weist einen verzahnten Sektor 41a, der sich hier ungefähr über einen Winkelbereich von 60° erstreckt, und einen unverzahnten Sektor 41b auf. Im verzahnten Sektor 41a bildet das Steuerrad 41 einen Steuerverzahnungsabschnitt 42 aus, der vorliegend vier Steuerzähne 46 umfasst. Im unverzahnten Sektor 41b ist statt einer Verzahnung eine Umfangsausnehmung 413 vorgesehen, deren Umfangslinie mit dem Fußkreis der Steuerzähne 46 übereinstimmt. Insofern ist das Steuerrad 41 teilverzahnt. Es könnten mehrere über den Umfang verteilte Steuerverzahnungsabschnitte 42 vorgesehen sein. Die Drehventile 20 sind radial so zum Steuerrad 41 beabstandet angeordnet, dass die Verzahnung 22, bestehend aus den Zähnen 24a, 25b, mit dem Steuerverzahnungsabschnitt 42 in Eingriff kommen kann. Die Zähne 24a, 25b berühren das Steuerrad 41 im unverzahnten Sektor 41b nicht. Bei einer Verdrehung des Steuerrads 41 kommt der Steuerverzahnungsabschnitt 42 nacheinander mit der Verzahnung 22 des jeweiligen Drehventils 20 in Eingriff. Dadurch sind die Drehventile 20 über das Steuerrad 41 verstellbar bzw. steuerbar. Die Drehventile 20 sind zwischen einer Öffnungsstellung P1 und einer Schließstellung P0 verstellbar. In der gezeigten Ausführungsform dreht sich bei einer Umdrehung des Steuerrads 41 jedes Drehventil 20 um 180° um die Drehachse D weiter. Dadurch wird ein Ventil 20 von einer anfänglichen Schließstellung P0 über eine Öffnungsstellung P1 wieder in eine Schließstellung P0 gebracht.

Durch die Steuerung der Drehbewegung des Steuerrads 41 kann ein Schmierungszeitintervall für jedes Drehventil 20 bzw. jeden zugeordneten Auslasskanal 14 variabel und unabhängig voneinander eingestellt werden. Vorzugsweise wird der Antrieb 30 so angesteuert, dass sich das Steuerrad 41 um vorbestimmte Winkel weiterdreht. Das Steuerrad 41 wird in der Öffnungsstellung P1 des derzeit im Eingriff befindlichen Drehventils 20 so lange angehalten, wie ein Schmierstofffluss durch den Auslasskanal 14 zugelassen werden soll, um eine gewünschte Schmiermittelmenge an eine Schmierstelle bereitzustellen. Grundsätzlich ist auch eine kontinuierliche Drehung des Steuerrads 41 denkbar, optional mit einer zeitweisen Verlangsamung oder Beschleunigung der Drehgeschwindigkeit. Auch ein Richtungswechsel des Steuerrads 41 kann prinzipiell vorgesehen sein, um eine bestimmte Schmierstoffverteilung zu erreichen, beispielsweise um einzelne nebeneinanderliegende Drehventile 20 nicht zu betätigen.

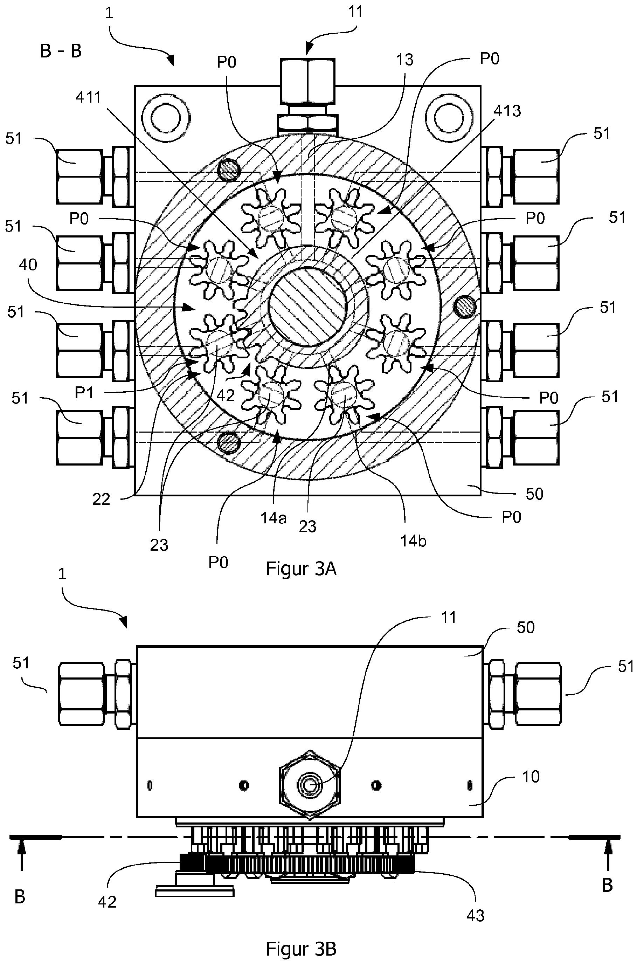

Die Verzahnung 22 eines Drehventils 20 weist den ersten axialen Verzahnungsbereich 221 mit ersten Zähnen 24a und einen zweiten axialen Verzahnungsbereich 222 mit zweiten Zähnen 24b auf. Erste und zweite Zähne 24a, 24b haben unterschiedliche Zahnlängen L1, L2. Erste Zähne 24a der ersten Zahnlänge L1 erstrecken sich über einen Teil der größeren zweiten Zahnlänge L2 der zweiten Zähne 24b. Insofern ist die Verzahnung 22 abgestuft, nämlich zweistufig. Von den insgesamt acht Zähnen 24a, 24b sind vier erste Zähne 24a und vier zweite Zähne 24b in Umfangsrichtung des Drehventils 20 abwechselnd angeordnet. Durch die Zweistufigkeit der Verzahnung 22 wird im Zusammenwirken mit dem nachfolgend beschriebenen Steuerrad 41 (siehe Fig. 3A bis 4B) eine Verdrehsicherung für die Drehventile 20 gegen unbeabsichtigtes Verdrehen erreicht, zu dem es beispielsweise durch Vibrationen des Schmierstoffverteilers 1 im Betrieb kommen könnte.

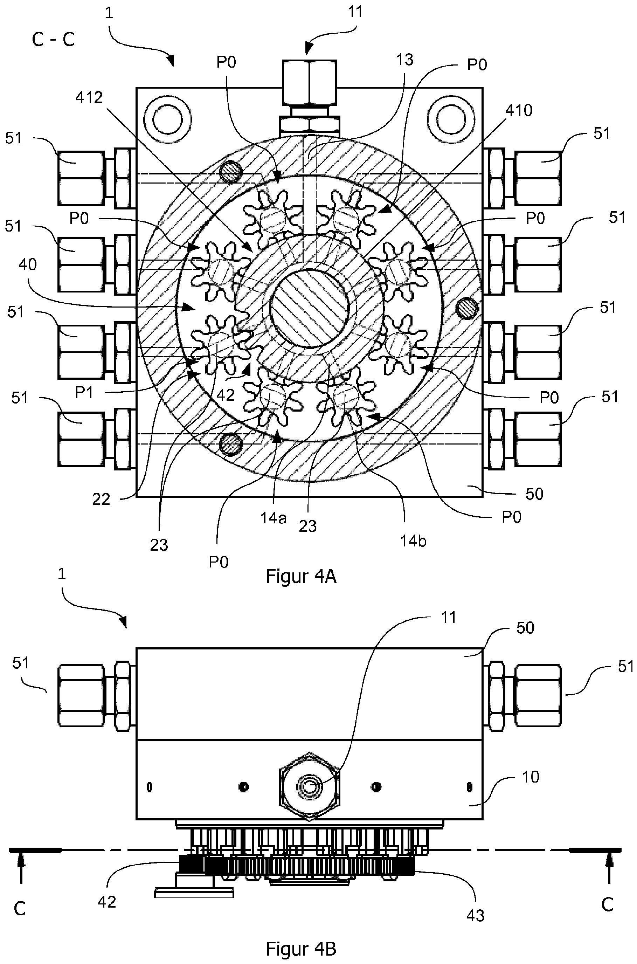

Aus einem Vergleich der Fig. 3A, 3B und 4A, 4B wird ersichtlich, dass das Steuerrad 41 einen ersten axialen Bereich 411 (siehe Fig. 3A und 3B) einen zweiten axialen Bereich 412 (siehe Fig. 4A und 4B) hat, wobei das Steuerrad 41 im unverzahnten Sektor 41b eine Umfangsausnehmung 413 in Form eines Kreisringsegments aufweist. Die Umfangsfläche 440 ist im unverzahnten Sektor 41b abgestuft ausgebildet. Die Umfangsfläche 440 springt im ersten axialen Bereich 411 gegenüber dem zweiten axialen Bereich 412 zurück. Umkehrt springt der zweite axiale Bereich 412 gegenüber dem ersten axialen Bereich 411 vor. Dadurch schlagen die Zahnflanken der zweiten, längeren Zähne 24b in der Schließstellung P0 eines Drehventils 20 an der Umfangsfläche 440 im zweiten axialen Bereich 412 des Steuerrads 41 bereits bei einer minimalen Verdrehung an (siehe Fig. 4A). Dadurch wird eine wesentliche Verdrehung des Drehventils 20 blockiert, während sich das Steuerrad 41 an diesen Drehventil 20 vorbei dreht, ohne aber damit in Eingriff zu kommen. Indem das Steuerrad 41 im ersten axialen Bereich 411 zurückspringt bzw. die Umfangsausnehmung 413 ausbildet, kann sich das Steuerrad 41 über die ersten, kürzeren Zähne 24a hinwegdrehen, während die zweiten Zähne 24b eine unbeabsichtigte Verstellung der in Schließstellung P0 befindlichen Drehventile 20 verhindert.

In der Ausführungsform nach den Fig. Fig. 3A bis 4B ist der Schmierstoffverteiler 1 mit einer Anschlussplatte 50 mit insgesamt acht Verteilungsanschlüssen 51 verbunden. Auslasskanäle zwischen dem Verteilerkörper 10 und den Verteilungsanschlüssen 51 sind gestrichelt dargestellt, wobei korrespondierende axiale Verbindungskanalabschnitte den Verteilerkörper 10 mit der Anschlussplatte 50 verbinden. Es sind drei Zentrierungsstifte geschnitten dargestellt. Der Schmierstoffverteiler 1 gemäß Fig. Fig. 3A bis 4B funktioniert gleich wie die die in den Fig. 1 bis 2B gezeigte Ausführungsform.

In dem erfindungsgemäßen Verfahren wird der Antrieb 30 angesteuert bzw. betätigt, um ein Drehventil 20 aus der Schließstellung P0 in die Öffnungsstellung P1 zu verdrehen. Eine Ansteuerung erfolgt beispielsweise durch eine Verteilersteuerungseinheit, die mit dem Schmierstoffverteiler bzw. dem Antrieb 30 verbunden ist. Anschließend wird ein Schmierungszeitintervall des jeweiligen Drehventils 20 eingestellt bzw. geeignet gewählt, indem das Steuerrad 41 so lange angehalten wird, wie ein Schmierstofffluss durch den Auslasskanal 14 für die Zuteilung einer gewünschten Schmierstoffmenge an eine Schmierstelle gewünscht ist. Daraufhin wird der Antrieb 30 wiederum angesteuert bzw. betätigt, um dieses Drehventil 20 aus der Öffnungsstellung P1 in die Schließstellung P0 weiter zu gehen. Dieser Vorgang wird reihum für jedes Drehventil 20 wiederholt, wobei die Schmierungszeitintervalle jeweils unterschiedlich und insbesondere pro Umdrehung des Steuerrads 41 variabel einstellbar sind.

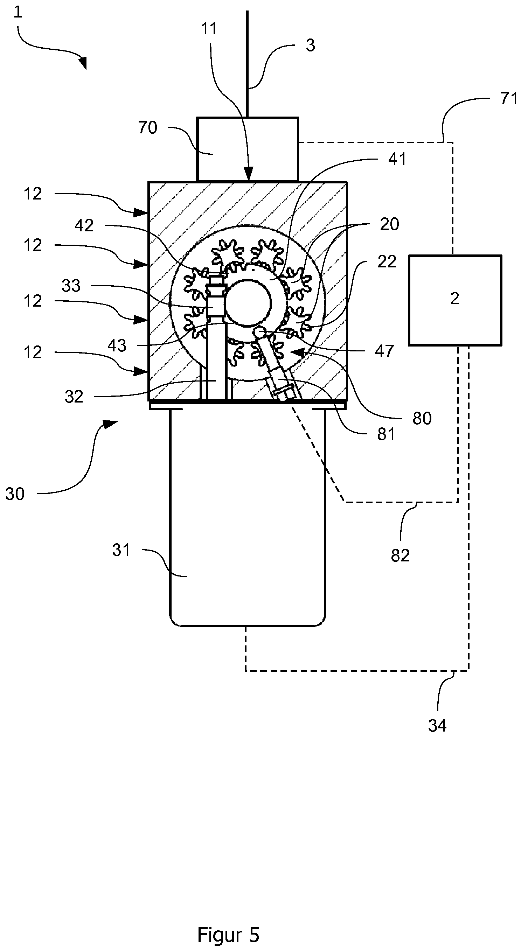

Figur 5 zeigt eine Ausführungsform eines erfindungsgemäßen Schmierstoffverteilers 1 mit einem Durchflusssensor 70 und einer Positionserfassungseinrichtung 80, die ansonsten aber gleich funktioniert wie die zuvor beschriebenen Ausführungsformen. Die Verzahnung 33 der Antriebswelle 32 ist als Antriebsschnecke ausgeführt. Die Antriebswelle 32 verläuft in dieser Ausführungsform senkrecht zur Drehachse S des Steuerrads 41.

Der Durchflusssensor 70 ist derart zwischen einer Schmierstoffzuleitung 3 und dem Verteilerkörper 10 angeordnet, dass er mit der Einlassöffnung 11 fluidisch verbunden ist. Der Durchflusssensor ist über eine Signalleitung 71 mit der zentralen Verteilersteuerungseinheit 2 verbunden. Die

Positionserfassungseinrichtung 80 umfasst ein Erregerelement 47 und einen Positionssensor 81, der hier als Reed-Schalter (Reed-Kontakt) ausgeführt und über Signalleitung 82 mit der Verteilersteuerungseinheit 2 verbunden ist. Der Positionssensor 81 könnte auch als Hall-Sensor bzw. Hall-Schalter (Hall-Kontakt) ausgeführt sein. Das Erregerelement 47 ist aus einem weichmagnetischen Material, beispielsweise aus Metall, und fest mit dem Steuerrad 41 verbunden, z.B. eingeschraubt. Bei jeder Umdrehung des Steuerrads 41 passiert das mitrotierende Erregerelement 47 den Positionssensor 81 und erzeugt, insbesondere durch Störung des Magnetfeldes des Positionssensor 81, ein Sensorsignal. Die Verteilersteuerungseinheit 2 ist auch mit dem Antrieb 30 bzw. dem Antriebsmotor 31 verbunden, insbesondere um eine Drehzahl des Antriebsmotors 31 zu erfassen. Aufgrund der erfassten Durchgangsposition bzw. Nullposition des Steuerrads 41 über das Erregerelement 47 und basierend auf einer übermittelten Drehzahl des Antriebsmotors 31 kann die Verteilersteuerungseinheit 2 die momentane Stellung der Drehventile 20 ermitteln bzw. berechnen. Die Verteilersteuerungseinheit 2 umfasst einen Prozessor bzw. Mikrocontroller und führt eine Signalauswertung durch. Die Positionserfassungseinrichtung 80 ermöglicht die Bestimmung des gerade geöffneten Drehventils 20 bzw. über welchen der Verteilungsanschlüsse 51 momentan Schmierstoff verteilt wird.

Ein erfindungsgemäßer Schmierstoffverteiler 1 und ein entsprechendes Verfahren haben den Vorteil, dass die einfach aufgebaut bzw. durchführbar sind.

### Bezugszeichenliste:

- 1: Schmierstoffverteiler
- 2: Verteilersteuerungseinheit
- 3: Schmierstoffzuleitung
- 10: Verteilerkörper
- 11: Einlassöffnung
- 12: Auslassöffnung
- 13: Einlasskanal
- 14: Auslasskanal
- 14a: innerer Kanalabschnitt
- 14b: äußerer Kanalabschnitt
- 15: Gehäusedeckel
- 20: Drehventil
- 21: Absperrkörper
- 22: Verzahnung
- 221: erster axialer Verzahnungsbereich
- 222: zweiter axialer Verzahnungsbereich
- 23: Durchgangsöffnung
- 24a: erste Zähne
- 24b: zweite Zähne
- 25: Dichtungsnut
- 30: Antrieb
- 31: Elektromotor, insbesondere Schrittmotor
- 32: Antriebswelle
- 33: Antriebszahnrad
- 34: Signalleitung
- 40: Steuergetriebe
- 41: Steuerrad
- 41a: verzahnter Sektor
- 41b: unverzahnter Sektor
- 42: Steuerverzahnungsabschnitt
- 43: Antriebsverzahnung
- 44: Achse
- 440: Umfangsfläche der Achse
- 45: Verteilungskanal, insbesondere Ringnut
- 46: Steuerzahn
- 47: Erregerelement
- 410: Umfangsfläche des Steuerrads
- 411: erster axialer Bereich
- 412: zweiter axialer Bereich
- 413: Umfangsausnehmung
- 414: Antriebszahnkranz
- 415: Steuerkranz
- 50: Anschlussplatte
- 51: Verteilungsanschluss
- 60: Dichtung
- 70: Durchflusssensor
- 71: Signalleitung
- 80: Positionserfassungseinrichtung
- 81: Positionssensor
- 82: Signalleitung
- 100: Schmiervorrichtung
- P0: Schließstellung
- P1: Öffnungsstellung
- D: Drehachse des Drehventils
- S: Drehachse des Steuerrads
- L1: erste Zahnlänge
- L2: zweite Zahnlänge

## Patentansprüche

1. Schmierstoffverteiler (1), insbesondere Sektionalverteiler, zur Verteilung von Schmierstoff an mindestens eine Schmierstelle, umfassend:
- einen Verteilerkörper (10) mit einer Einlassöffnung (11) für Schmierstoff, die fluidisch mit mindestens einem Auslasskanal (14) verbunden ist, der in eine Auslassöffnung (12) des Verteilerkörpers (10) mündet,
- ein in dem Verteilerkörper (10) drehbar gelagertes Drehventil (20), das zwischen einer Öffnungsstellung (P1) des Drehventils (20), in der der Auslasskanal (14) geöffnet ist, um Schmierstoff zur Auslassöffnung (12) durchzulassen, und einer Schließstellung (P0) des Drehventils (20), in der der Auslasskanal (14) geschlossen ist, verstellbar ist,
- einen, insbesondere elektromotorischen, Antrieb (30), der mit einem Steuergetriebe (40) gekoppelt ist,
**dadurch gekennzeichnet, dass** das Steuergetriebe (40) ein Steuerrad (41) mit mindestens einem Steuerverzahnungsabschnitt (42) umfasst, der mit einer Verzahnung (22) des Drehventils (20) in Eingriff bringbar ist, um das Drehventil (20) zwischen der Öffnungsstellung (P1) und der Schließstellung (P0) zu verstellen,
wobei ein Schmierungszeitintervall, während dem sich ein Drehventil (20) in der Öffnungsstellung (P1) befindet, variabel einstellbar ist.

2. Schmierstoffverteiler (1) nach Anspruch 1,
**dadurch gekennzeichnet, dass** der Antrieb (30) eine von einem Elektromotor (31) angetriebene Antriebswelle (32) mit einer Verzahnung (33) aufweist, die mit einer Antriebsverzahnung (43) des Steuerrads (41) kämmt.

3. Schmierstoffverteiler (1) nach Anspruch 1 oder 2,
**dadurch gekennzeichnet, dass**
mehrere Drehventile (20), insbesondere im gleichen Abstand der Drehachse (R) des jeweiligen Drehventils (20) zu einer Drehachse (S) des Steuerrads (41), um das Steuerrad (41) herum angeordnet sind.

4. Schmierstoffverteiler (1) nach einem der vorherigen Ansprüche,
**dadurch gekennzeichnet, dass** das Steuerrad (41) mindestens einen verzahnten Sektor (41a), über den sich der Steuerverzahnungsabschnitt (42) erstreckt, und mindestens einen unverzahnten Sektor (41b) aufweist.

5. Schmierstoffverteiler (1) nach einem der vorherigen Ansprüche,
**dadurch gekennzeichnet, dass** die Verzahnung (22) des Drehventils (20) unterschiedliche axiale Verzahnungsbereiche (221, 222) aufweist, wobei ein erster axialer Verzahnungsbereich (221) insbesondere weniger, vorzugsweise halb so viele, Zähne (24a) aufweist wie ein zweiter axialer Verzahnungsbereich (222).

6. Schmierstoffverteiler (1) nach einem der vorherigen Ansprüche,
**dadurch gekennzeichnet, dass**
erste Zähne (24a) eines ersten axialen Verzahnungsbereichs (221) und zweite Zähne (24b) eines zweiten axialen Verzahnungsbereichs (222) unterschiedliche Zahnlängen (L1 bzw. L2) aufweisen, wobei vorzugsweise erste Zähne (24a) mit einer ersten Zahnlänge (L1) und zweite Zähne (24b) einer zweiten Zahnlänge (L2) abwechselnd angeordnet sind.

7. Schmierstoffverteiler (1) nach einem der vorherigen Ansprüche,
**dadurch gekennzeichnet, dass** das Steuerrad (41) im unverzahnten Sektor (41b) einen ersten und einen zweiten axialen Bereich (411, 412) aufweist, wobei der erste axiale Bereich (411) eine Umfangsausnehmung (413) aufweist.

8. Schmierstoffverteiler (1) nach einem der vorherigen Ansprüche,
**dadurch gekennzeichnet, dass** sich der erste Verzahnungsbereich (221) der Verzahnung (22) des Drehventils (20) in den ersten axialen Bereich (411) aber nicht in den zweiten axialen Bereich (412) des Steuerrads (41) und sich der zweite Verzahnungsbereich (222) der Verzahnung (22) des Drehventils (20) in den ersten axialen Bereich (411) und den zweiten axialen Bereich (412) des Steuerrads (41) erstrecken.

9. Schmierstoffverteiler (1) nach einem der vorherigen Ansprüche,
**dadurch gekennzeichnet, dass** die Umfangsfläche (410) im zweiten axialen Bereich (412) des Steuerrads (41) eine Drehbewegung des Drehventils (20) blockiert wenn sich das Drehventils (20) in einer Schließstellung (P0) befindet, insbesondere indem Zahnflanken der zweiten Zähne (24b) bei einer Verdrehung des Drehventils (20) gegen die Umfangsfläche (410) im zweiten axialen Bereich (412) des Steuerrads (41) anschlagen.

10. Schmierstoffverteiler (1) nach einem der vorherigen Ansprüche,
**dadurch gekennzeichnet, dass** der Verteilerkörper (10) einen von der Einlassöffnung (11) ausgehenden, vorzugsweise radialen, Einlasskanal (13) aufweist, der über einen, vorzugsweise zentralen, Verteilungskanal (45) mit dem mindestens einen, vorzugsweise radialen, Auslasskanal (14) fluidisch verbunden ist.

11. Schmierstoffverteiler (1) nach einem der vorherigen Ansprüche,
**dadurch gekennzeichnet, dass** das Steuerrad (41) auf einer im Verteilerkörper (10) gelagerten Achse (44) sitzt, die insbesondere parallel zu einer Drehachse (D) des Drehventils (20) ausgerichtet ist.

12. Schmierstoffverteiler (1) nach einem der vorherigen Ansprüche, insbesondere nach Anspruch 11,
**dadurch gekennzeichnet, dass** der Verteilungskanal (45) als ein Ringkanal, insbesondere als eine Ringnut in einer Umfangsfläche (440) der Achse (44), ausgebildet ist.

13. Schmierstoffverteiler (1) nach einem der vorherigen Ansprüche,
**dadurch gekennzeichnet, dass** das Drehventil (20) einen Absperrkörper (21), vorzugswese einen Absperrzylinder, mit einer Durchgangsöffnung (23) umfasst, die vorzugsweise senkrecht zur Drehachse (D) verläuft.

14. Schmierstoffverteiler (1) nach einem der vorherigen Ansprüche,
**dadurch gekennzeichnet, dass** der Auslasskanal (14) einen inneren Kanalabschnitt (14a), der in den Verteilungskanal (45) einmündet, und einen äußeren Kanalabschnitt (14b) aufweist, wobei der Absperrkörper (21) des Drehventils (20) zwischen dem inneren und dem äußeren Kanalabschnitt (14a bzw. 14b) angeordnet ist.

15. Schmierstoffverteiler (1) nach einem der vorherigen Ansprüche,
**dadurch gekennzeichnet, dass** der Steuerverzahnungsabschnitt (42) des Steuerrads (41) derart auf die Verzahnung (22), insbesondere den ersten axialen Verzahnungsabschnitt (221), des Drehventils (20) abgestimmt ist, dass eine Umdrehung des Steuerrads (41) eine Verdrehung des Drehventils (20) um 180° bewirkt.

16. Schmierstoffverteiler (1) nach einem der vorherigen Ansprüche,
**dadurch gekennzeichnet, dass**
ein Schmierungszeitintervall, während dem sich ein Drehventil (20) in der Öffnungsstellung (P1) befindet, für mehrere Drehventile (20) nacheinander variabel einstellbar ist.

17. Schmierstoffverteiler (1) nach einem der vorherigen Ansprüche,
**dadurch gekennzeichnet, dass** der Elektromotor (31) als Schrittmotor ausgeführt ist, der insbesondere durch eine Verteilersteuerungseinheit ansteuerbar ausgebildet ist.

18. Schmierstoffverteiler (1) nach einem der vorherigen Ansprüche,
**dadurch gekennzeichnet, dass** zwischen 2 und 16, vorzugsweise zwischen 4 und 12, weiter vorzugsweise zwischen 6 und 10, besonders bevorzugt 8, Auslasskanäle (14) vorgesehen sind, denen jeweils ein Drehventil (20) zugeordnet ist.

19. Schmierstoffverteiler (1) nach einem der vorherigen Ansprüche,
**dadurch gekennzeichnet, dass** der Schmierstoffverteiler (1) einen Durchflusssensor (70), vorzugsweise einen Ovalradzähler oder Kolbenzähler, umfasst, der fluidisch mit der Einlassöffnung (11) verbunden ist, insbesondere zur Erfassung eines Schmierstoffflusses im Auslasskanal (14).

20. Schmierstoffverteiler (1) nach einem der vorherigen Ansprüche,
**dadurch gekennzeichnet, dass** der Schmierstoffverteiler (1) eine Positionserfassungseinrichtung (80) zur Erfassung der Stellung des Steuergetriebes (40) umfasst, wobei die Positionserfassungseinrichtung (80) insbesondere einen Positionssensor (81), der vorzugsweise als Hall-Sensor oder Reed-Schalter ausgeführt ist, und ein mit dem Steuerrad (41) mitrotierendes Erregerelement (47) umfasst.

21. Schmiervorrichtung (100) umfassend einen Schmierstoffverteiler (1) nach einem der Ansprüche 1 bis 20 und eine Schmierstoffpumpe, die zur Bereitstellung von, insbesondere mit einem Förderdruck beaufschlagtem, Schmierstoff mit der Einlassöffnung (11) des Schmierstoffverteilers (1) verbunden ist.

22. Verfahren zur Verteilung von Schmierstoff an mindestens eine Schmierstelle durch einen Schmierstoffverteiler (1), der mindestens ein in einem Verteilerkörper (10) drehbar gelagertes Drehventil (20) zum Öffnen und Schließen eines Auslasskanals (14) des Verteilerkörpers (10) für Schmierstoff aufweist, wobei ein, insbesondere elektromotorischer, Antrieb (30) des Schmierstoffverteilers (1) mit einem Steuergetriebe (40) zum Verstellen des Drehventils (20) gekoppelt ist,
insbesondere durch einen Schmierstoffverteiler nach einem der Ansprüche 1 bis 20 oder eine Schmiervorrichtung (100) nach Anspruch 21,
umfassend die folgenden Schritte:
a) Verstellen des Drehventils (20) aus einer Schließstellung (P0), in der der Auslasskanal (14) geschlossen ist, in eine Öffnungsstellung (P1), in der der Auslasskanal (14) geöffnet ist, durch Ansteuern des Antriebs (30),
b) Einstellen eines Schmierungszeitintervalls durch Ansteuern des Antriebs (30), wobei sich das Drehventil (20) während des Schmierungszeitintervalls in der Öffnungsstellung (P1) befindet,
c) Verstellen des Drehventils (20) aus der Öffnungsstellung (P1) in die Schließstellung (P0), durch Ansteuern des Antriebs (30)
**dadurch gekennzeichnet, dass** ein oder mehrere Drehventile (20) nacheinander durch eine Wiederholung der Schritte a) bis c) geöffnet und geschlossen wird bzw. werden, wobei das Schmierungszeitintervall jeweils verschieden eingestellt wird.

## Claims

1. A lubricant distributor (1), in particular a sectional distributor, for distributing lubricant to at least one lubrication point, comprising:
- a distributor body (10) having an inlet opening (11) for lubricant, which is in fluid communication with at least one outlet channel (14) opening into an outlet opening (12) of the distributor body (10),
- a rotary valve (20) mounted to be rotatable within the distributor body (10), which is shiftable between an opening position (P1) of the rotary valve (20), in which the outlet channel (14) is opened to allow lubricant to pass to the outlet opening (12), and a closing position (P0) of the rotary valve (20), in which the outlet channel (14) is closed,
- an in particular electromotive drive (30) which is coupled to a control gear (40),
**characterized in that** the control gear (40) comprises a control wheel (41) having at least one control toothing portion (42) which can be brought into engagement with a toothing (22) of the rotary valve (20) so as to shift the rotary valve (20) between the opening position (P1) and the closing position (P0),
wherein a lubricating time interval, during which the rotary valve (20) is in the opening position (P1), is variably adjustable.

2. The lubricant distributor (1) according to claim 1,
**characterized in that** the drive (30) has a drive shaft (324) driven by an electric motor (31) and having a toothing (33) meshing with a drive toothing (43) of the control wheel (41).

3. The lubricant distributor (1) according to claim 1 or 2,
**characterized in that** a plurality of rotary valves (20) are arranged around the control wheel (41) in particular at an equal distance of the axis of rotation (R) of the respective rotary valve (20) from an axis of rotation (S) of the control wheel (41).

4. The lubricant distributor (1) according to any one of the preceding claims,
**characterized in that** the control wheel (41) has at least one toothed sector (41a) over which the control toothing portion (42) extends, and at least one untoothed sector (41b).

5. The lubricant distributor (1) according to any one of the preceding claims,
**characterized in that** the toothing (22) of the rotary valve (20) has different axial toothing areas (221, 222), wherein a first axial toothing area (221) has in particular less, preferably half as much teeth (24a) as a second axial toothing area (222).

6. The lubricant distributor (1) according to any one of the preceding claims,
**characterized in that**
first teeth (24a) of a first axial toothing area (221) and second teeth (24b) of a second axial toothing area (222) have different tooth lengths (L1 and L2, respectively), wherein preferably first teeth (24a) having a first tooth length (L1) and second teeth (24b) having a second tooth length (L2) are arranged alternatingly.

7. The lubricant distributor (1) according to any one of the preceding claims,
**characterized in that** the control wheel (41), in the untoothed sector (41b), has a first and a second axial area (411, 412), wherein the first axial area (411) has a circumferential recess (413).

8. The lubricant distributor (1) according to any one of the preceding claims,
**characterized in that** the first toothing area (221) of the toothing (22) of the rotary valve (20) extends into the first axial area (411) but not into the second axial area (412) of the control wheel (41), and the second toothing area (222) of the toothing (22) of the rotary valve (20) extends into the first axial area (411) and into the second axial area (412) of the control wheel (41).

9. The lubricant distributor (1) according to any one of the preceding claims,
**characterized in that** the circumferential surface (410) in the second axial area (412) of the control wheel (41) blocks a rotary movement of the rotary valve (20), when the rotary valve (20) is in a closing position (P0), in particular by tooth flanks of the second teeth (24b) hitting against the circumferential surface (410) in the second axial area (412) of the control wheel (41) when the rotary valve (20) is turning.

10. The lubricant distributor (1) according to any one of the preceding claims,
**characterized in that** the distributor body (10) has a preferably radial inlet channel (13) starting from the inlet opening (11) and being in fluid communication with the at least one preferably radial outlet channel (14) via a preferably central distribution channel (45).

11. The lubricant distributor (1) according to any one of the preceding claims,
**characterized in that** the control wheel (41) is seated on an axle (44) mounted within the distributor body (10), which is oriented to be in particular parallel to an axis of rotation (D) of the rotary valve (20).

12. The lubricant distributor (1) according to any one of the preceding claims, in particular according to claim 11,
**characterized in that** the distribution channel (45) is formed as a ring channel, in particular as a ring groove in a circumferential surface (440) in the axle (44).

13. The lubricant distributor (1) according to any one of the preceding claims,
**characterized in that** the rotary valve (20) comprises a locking body (21), preferably a locking cylinder, having a through-opening (23) running preferably perpendicular to the axis of rotation (D).

14. The lubricant distributor (1) according to any one of the preceding claims,
**characterized in that** the outlet channel (14) has an inner channel portion (14a) opening into the distribution channel (45), and an outer channel portion (14b), wherein the locking body (21) of the rotary valve (20) is arranged between the inner and the outer channel portion (14a and 14b, respectively).

15. The lubricant distributor (1) according to any one of the preceding claims,
**characterized in that** the control toothing portion (42) of the control wheel (41) is matched to the toothing (22), in particular the first axial toothing portion (221), of the rotary valve (20) such that one rotation of the control wheel (41) causes the rotary valve (20) to turn by 180°.

16. The lubricant distributor (1) according to any one of the preceding claims,
**characterized in that** the lubricating time interval, during which the rotary valve (20) is in the opening position (P1), is variably adjustable consecutively for a plurality of rotary valves (20).

17. The lubricant distributor (1) according to any one of the preceding claims,
**characterized in that** the electric motor (31) is realized as a stepper motor which is in particular formed to be drivable by a distributor control unit.

18. The lubricant distributor (1) according to any one of the preceding claims,
**characterized in that** between 2 and 16, preferably between 4 and 12, further preferred between 6 and 10, particularly preferred 8 outlet channels (14) are provided each having one rotary valve (20) allocated.

19. The lubricant distributor (1) according to any one of the preceding claims,
**characterized in that** the lubricant distributor (1) comprises a flow sensor (70), preferably an oval wheel meter or a piston meter which is in fluid communication with the inlet opening (11), in particular for detecting a lubricant flow in the outlet channel (14).

20. The lubricant distributor (1) according to any one of the preceding claims,
**characterized in that** the lubricant distributor (1) comprises a position detection device (80) for detecting the position of the control gear (40), wherein the position detection device (80) comprises in particular a position sensor (81) preferably realized as a Hall sensor or reed switch, and an exciting element (47) corotating with the control wheel (41).

21. A lubricating device (100), comprising a lubricant distributor (1) according to any one of claims 1 to 20, and a lubricant pump in communication with the inlet opening (11) of the lubricant distributor (1) for delivering lubricant that is in particular pressurized with a delivery pressure.

22. A method for distributing lubricant to at least one lubricating point by a lubricant distributor (1) which has at least one rotary valve (20) mounted to be rotatable within a distributor body (10) for opening and closing an outlet channel (14) of the distributor body (10) for lubricant, wherein an in particular electromotive drive (30) of the lubricant distributor (1) is coupled to a control gear (40) for adjusting the rotary valve (20),
in particular by a lubricant distributor according to any one of claims 1 to 20 or a lubricating device (100) according to claim 21,
comprising the steps of:
a) shifting the rotary valve (20) from a closing position (P0), in which the outlet channel (14) is closed, into an opening position (P1), in which the outlet channel (14) is opened, by controlling the drive (30),
b) adjusting a lubricating time interval by controlling the drive (30), wherein the rotary valve (20) is in the opening position (P1) during the lubricating time interval,
c) shifting the rotary valve (20) from the opening position (P1) into the closing position (P0) by controlling the drive (30),
**characterized in that** one or more rotary valves (20) is or are opened and closed consecutively by repeating steps a) to c), wherein the lubricating time interval is in each case adjusted differently.

## Revendications

1. Distributeur de lubrifiant (1), en particulier distributeur sectionnel, pour la distribution de lubrifiant à au moins un point de lubrification, comprenant :
- un corps de distributeur (10) pourvu d'une ouverture d'entrée (11) pour lubrifiant, qui est reliée fluidiquement à au moins un conduit de sortie (14) qui débouche dans une ouverture de sortie (12) du corps de distributeur (10),
- une vanne rotative (20) logée de manière rotative dans le corps de distributeur (10), qui est déplaçable entre une position d'ouverture (P1) de la vanne rotative (20), dans laquelle le conduit de sortie (14) est ouvert pour laisser passer du lubrifiant vers l'ouverture de sortie (12), et une position de fermeture (P0) de la vanne rotative (20), dans laquelle le conduit de sortie (14) est fermé,
- un entraînement (30), en particulier électromoteur, qui est couplé à un engrenage de commande (40),
**caractérisé en ce que** l'engrenage de commande (40) comprend une roue de commande (41) pourvue d'au moins une section de denture de commande (42) pouvant être mise en engrènement avec une denture (22) de la vanne rotative (20) pour déplacer la vanne rotative (20) entre la position d'ouverture (P1) et la position de fermeture (P0),
sachant qu'un intervalle de temps de lubrification pendant lequel une vanne rotative (20) se trouve dans la position d'ouverture (P1) est réglable de manière variable.

2. Distributeur de lubrifiant (1) selon la revendication 1,
**caractérisé en ce que** l'entraînement (30) présente un arbre d'entraînement (32) entraîné par un électromoteur (31) et est pourvu d'une denture (33) qui s'engrène avec une denture d'entraînement (43) de la roue de commande (41).

3. Distributeur de lubrifiant (1) selon la revendication 1 ou 2,
**caractérisé en ce que**
plusieurs vannes rotatives (20), en particulier à la même distance de l'axe de rotation (R) de la vanne rotative (20) respective par rapport à un axe de rotation (S) de la roue de commande (41), sont disposées autour de la roue de commande (41).

4. Distributeur de lubrifiant (1) selon l'une des revendications précédentes,
**caractérisé en ce que** la roue de commande (41) présente au moins un secteur denté (41a) sur lequel la section de denture de commande (42) s'étend, et au moins un secteur non denté (41b).

5. Distributeur de lubrifiant (1) selon l'une des revendications précédentes,
**caractérisé en ce que** la denture (22) de la vanne rotative (20) présente différentes zones de denture axiales (221, 222), sachant qu'une première zone de denture axiale (221) présente en particulier moins, de préférence la moitié de dents (24a) qu'une deuxième zone de denture axiale (222).

6. Distributeur de lubrifiant (1) selon l'une des revendications précédentes,
**caractérisé en ce que**
des premières dents (24a) d'une première zone de denture axiale (221) et des deuxièmes dents (24b) d'une deuxième zone de denture axiale (222) présentent des longueurs de dent différentes (L1 ou L2), sachant que de préférence des premières dents (24a) d'une première longueur de dent (L1) et des deuxièmes dents (24b) d'une deuxième longueur de dent (L2) sont disposées en alternance.

7. Distributeur de lubrifiant (1) selon l'une des revendications précédentes,
**caractérisé en ce que** la roue de commande (41), dans le secteur non denté (41b), présente une première et une deuxième zone axiale (411, 412), sachant que la première zone axiale (411) présente un évidement périphérique (413).

8. Distributeur de lubrifiant (1) selon l'une des revendications précédentes,
**caractérisé en ce que** la première zone de denture (221) de la denture (22) de la vanne rotative (20) s'étend dans la première zone axiale (411) mais pas dans la deuxième zone axiale (412) de la roue de commande (41), et la deuxième zone de denture (222) de la denture (22) de la vanne rotative (20) s'étend dans la première zone axiale (411) et la deuxième zone axiale (412) de la roue de commande (41).

9. Distributeur de lubrifiant (1) selon l'une des revendications précédentes,
**caractérisé en ce que** la face périphérique (410) dans la deuxième zone axiale (412) de la roue de commande (41) bloque un mouvement de rotation de la vanne rotative (20) lorsque la vanne rotative (20) se trouve dans une position de fermeture (P0), en particulier **en ce que** des flancs de dent des deuxièmes dents (24b) butent contre la face périphérique (410) dans la deuxième zone axiale (412) de la roue de commande (41) en cas de rotation de la vanne rotative (20).

10. Distributeur de lubrifiant (1) selon l'une des revendications précédentes,
**caractérisé en ce que** le corps de distributeur (10) présente un conduit d'entrée (13) partant de l'ouverture d'entrée (13), de préférence radial, qui est relié fluidiquement à l'au moins un conduit de sortie (14), de préférence radial, via un conduit de distribution (45), de préférence central.

11. Distributeur de lubrifiant (1) selon l'une des revendications précédentes,
**caractérisé en ce que** la roue de commande (41) repose sur un axe (44) logé dans le corps de distributeur (10), et qui est en particulier orienté parallèlement à un axe de rotation (D) de la vanne rotative (20).

12. Distributeur de lubrifiant (1) selon l'une des revendications précédentes, en particulier selon la revendication 11,
**caractérisé en ce que** le conduit de distribution (45) est constitué comme conduit annulaire, en particulier comme gorge annulaire dans une face périphérique (440) de l'axe (44).

13. Distributeur de lubrifiant (1) selon l'une des revendications précédentes,
**caractérisé en ce que** la vanne rotative (20) comprend un corps d'isolement (21), de préférence un cylindre d'isolement, pourvu d'une ouverture traversante (23) qui est de préférence perpendiculaire à l'axe de rotation (D).

14. Distributeur de lubrifiant (1) selon l'une des revendications précédentes,
**caractérisé en ce que** le conduit de sortie (14) présente une section de conduit intérieure (14a) qui débouche dans le conduit de distribution (45) et une section de conduit extérieure (14b), sachant que le corps d'isolement (21) de la vanne rotative (20) est disposé entre les sections de conduit intérieure et extérieure (14a et 14b, respectivement).

15. Distributeur de lubrifiant (1) selon l'une des revendications précédentes,
**caractérisé en ce que** la section de denture de commande (42) de la roue de commande (41) est ajustée à la denture (22), en particulier à la première section de denture axiale (221), de la vanne rotative (20) de telle manière qu'un tour de la roue de commande (41) engendre une rotation de la vanne rotative (20) de 180°.

16. Distributeur de lubrifiant (1) selon l'une des revendications précédentes,
**caractérisé en ce que**
un intervalle de temps de lubrification pendant lequel une vanne rotative (20) se trouve dans la position d'ouverture (P1) est réglable de manière variable pour plusieurs vannes rotatives (20) les unes après les autres.

17. Distributeur de lubrifiant (1) selon l'une des revendications précédentes,
**caractérisé en ce que** l'électromoteur (31) est exécuté comme moteur pas-à-pas qui est en particulier constitué de manière à pouvoir être piloté par une unité de commande de distributeur.

18. Distributeur de lubrifiant (1) selon l'une des revendications précédentes,
**caractérisé en ce qu'**entre 2 et 16, de préférence entre 4 et 12, de manière plus préférentielle entre 6 et 10, de manière particulièrement préférentielle 8, conduits de sortie (14) sont prévus, auxquels une vanne rotative (20) est associée respectivement.

19. Distributeur de lubrifiant (1) selon l'une des revendications précédentes,
**caractérisé en ce que** le distributeur de lubrifiant (1) comprend un capteur de débit (70), de préférence un compteur à roue ovale ou un compteur à piston, qui est relié fluidiquement à l'ouverture d'entrée (11), en particulier pour la saisie d'un flux de lubrifiant dans le conduit de sortie (14).

20. Distributeur de lubrifiant (1) selon l'une des revendications précédentes,
**caractérisé en ce que** le distributeur de lubrifiant (1) comprend un dispositif de saisie de position (80) pour la saisie de la position de l'engrenage de commande (40), sachant que le dispositif de saisie de position (80) comprend en particulier un capteur de position (81) qui est de préférence exécuté comme capteur de Hall ou commutateur de Reed, et un élément excitateur (47) solidaire en rotation avec la roue de commande (41).

21. Dispositif de lubrification (100) comprenant un distributeur de lubrifiant (1) selon l'une des revendications 1 à 20 et une pompe de lubrifiant qui est reliée à l'ouverture d'entrée (11) du distributeur de lubrifiant (1) pour la mise à disposition de lubrifiant, en particulier soumis à une pression de refoulement.

22. Procédé de distribution de lubrifiant à au moins un point de lubrification par un distributeur de lubrifiant (1) qui présente au moins une vanne rotative (20) logée de manière rotative dans un corps de distributeur (10) pour l'ouverture et la fermeture d'un conduit de sortie (14) du corps de distributeur (10) pour lubrifiant, sachant qu'un entraînement (30), en particulier du type électromoteur, du distributeur de lubrifiant (1) est couplé à un engrenage de commande (40) pour le déplacement de la vanne rotative (20),
en particulier par un distributeur de lubrifiant selon l'une des revendications 1 à 20 ou un dispositif de lubrification (100) selon la revendication 21,
comprenant les étapes suivantes :
a) déplacement de la vanne rotative (20) d'une position de fermeture (P0), dans laquelle le conduit de sortie (14) est fermé, à une position d'ouverture (P1), dans laquelle le conduit de sortie (14) est ouvert, par pilotage de l'entraînement (30),
b) réglage d'un intervalle de temps de lubrification par pilotage de l'entraînement (30), sachant que, pendant l'intervalle de temps de lubrification, la vanne rotative (20) se trouve dans la position d'ouverture (P1),
c) déplacement de la vanne rotative (20) de la position d'ouverture (P1) à la position de fermeture (P0) par pilotage de l'entraînement (30),
**caractérisé en ce qu'**une ou plusieurs vannes rotatives (20) est/sont ouverte/s et fermée/s les unes après les autres par une répétition des étapes a) à c), sachant que l'intervalle de temps de lubrification est réglé respectivement de manière différente.
